# EUROPEAN PATENT SPECIFICATION

(11) **EP 2 605 636 B1**
(45) Date of publication and mention of the grant of the patent: **25.07.2018**
(21) Application number: 11754784.4
(22) Date of filing: 19.08.2011
(51) Int. Cl.: A01D 45/02

(54) **COMBINATION DRIVEN AND IDLER SNAP ROLLS FOR CORN HEADER**
KOMBINATION AUS ANGETRIEBENEN UND MITLÄUFERPFLÜCKWALZEN FÜR EINEN MAISPFLÜCKER
COMBINAISON DE ROULEAU ENTRAÎNÉ ET DE ROULEAU FOU POUR BEC CUEILLEUR À MAÏS

(30) Priority: 22.12.2010 US 201061426300 P; 22.12.2010 US 201061426277 P; 22.12.2010 US 201061426263 P; 22.12.2010 US 201061426234 P; 22.12.2010 US 201061426213 P; 22.12.2010 US 201061426193 P; 22.12.2010 US 201061426167 P; 22.12.2010 US 201061426141 P; 22.12.2010 US 201061426119 P; 22.12.2010 US 201061426072 P; 22.12.2010 US 201061425935 P; 22.12.2010 US 201061425920 P; 22.12.2010 US 201061425907 P; 22.12.2010 US 201061425887 P; 22.12.2010 US 201061425836 P; 22.12.2010 US 201061426090 P; 22.12.2010 US 201061425804 P; 19.08.2010 US 375196 P
(43) Date of publication of application: 26.06.2013
(73) Proprietor: Agco Corporation, Duluth, Georgia 30096 (US)
(72) Inventor: LOHRENTZ, Randy, Buhler Kansas 67522 (US); MATOUSEK, Robert, Milan Illinois 61264 (US)
(74) Representative: AGCO Intellectual Property Department
(86) International application number: PCT/US2011/048379
(87) International publication number: WO 2012/024565

(56) References cited:
- DE-C1- 4 344 669
- US-A- 5 009 061

## Description

### TECHNICAL FIELD

This invention relates to cutting and gathering stalk crops such as corn with a header coupled to an agricultural vehicle.

### BACKGROUND

Agricultural harvesters such as combines are typically equipped with a harvesting header. Corn headers are specifically designed to pick corn and vary in size from two-row units to twelve-row units or more. As the harvester moves through the field, each row-unit passes between rows of corn. Corn header row units typically use gathering chains to covey crop material and ears rearward toward a cross auger. A set of driven snap rolls, which rotate based on the speed of the harvester, grabs the corn stalks and forces them downward between stripper plates. The ears of corn are snapped free of the stalk and the cross auger passes the ears to the feeder housing of the harvester. If the snap rolls are operated too fast or too slow, ears of corn may be lost or entire corn stalks may be passed to the cross auger and feeder housing.

Known row units require two gathering chains and two tensioners which are heavy, expensive and wear out easily. Furthermore, the gathering chains create a complicated drive mechanism because the axes of the drive sprockets driving the chains are at right angles to the axes of the snap rolls. Also, the gathering chains do not effectively convey a large mass of crop in conditions when material other than ears of corn, such as stalks and leaves, are severed from the ground. What is needed is a simpler and more cost effective row unit that is capable of conveying a large mass of crop.

DE-4,344,669 discloses a picking attachment for a harvester having one or more powered pull-in rotors in combination with a cutting roller serving to cut the gathered crop material.

### BRIEF DESCRIPTION OF THE DRAWINGS

The accompanying drawings, which are incorporated in and constitute a part of this disclosure, illustrate various embodiments of the present invention. In the drawings:
FIG. 1 shows a perspective view of a corn header having a plurality of row units for an agricultural vehicle;
FIG. 2 shows a top view of the header of FIG. 1;
FIG. 3 shows a close-up view of a portion of the header of FIG. 1;
FIG. 4 shows a portion of the bottom of the header of FIG. 1;
FIG. 5 shows a perspective view of a frame which forms part of a live row unit and part of an adjacent dead row unit;

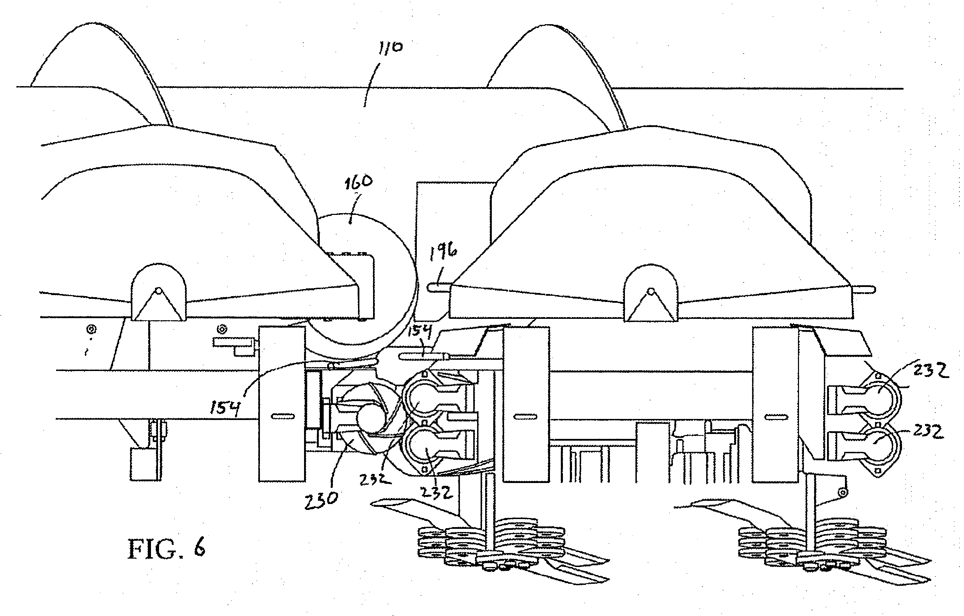

FIG. 6 is a close-up front view of the header showing offset stripper plates and a pair unpowered idler rolls offset from a powered snap roll; and,

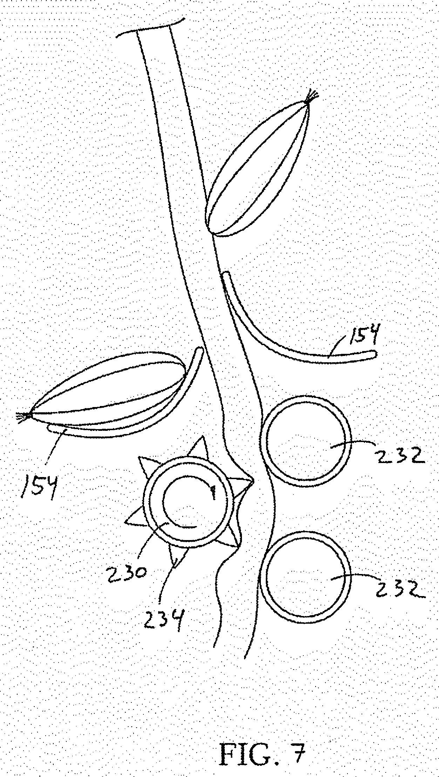

FIG. 7 shows offset stripper plates and a pair of idler rolls offset from a powered snap roll.

### DESCRIPTION OF EXAMPLE EMBODIMENTS

The present invention is susceptible of embodiment in many different forms. While the drawings illustrate and the specification describes certain preferred embodiments of the invention, it is to be understood that such disclosure is by way of example only. There is no intent to limit the principles of the present invention to the particular disclosed embodiments. References hereinafter made to certain directions, such as, for example, "left" and "right", are made as viewed from the front looking rearward.

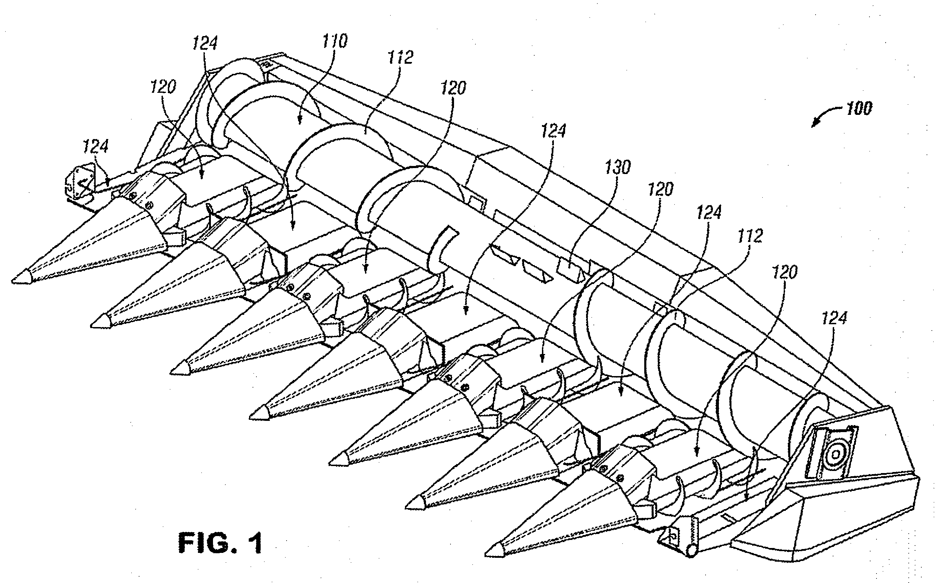

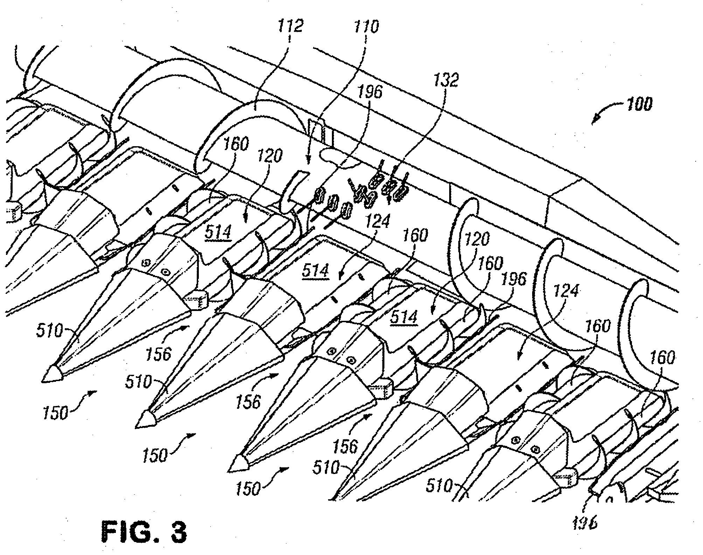

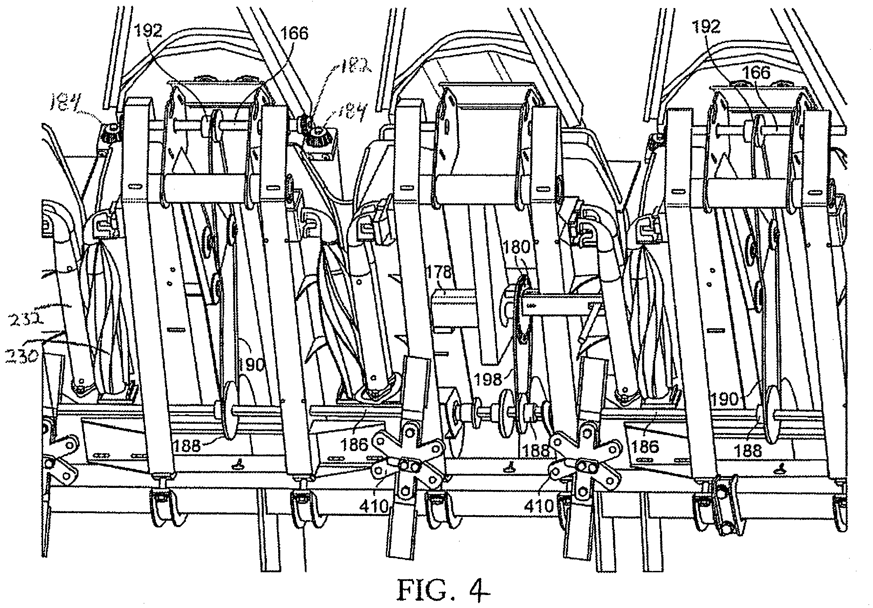

The exemplary header 100 selected for illustration in FIGS. 1-4 has a cross auger 110 with spiral flighting 112 for sweeping the ears of corn toward the center of the header 100. Large cross augers 110 may also have paddles 130, fingers 132 or some other means to facilitate the delivery of the crop rearward to the feeder housing of a harvester. The header 110 has a plurality of forward-extending live row-units 120 and a plurality of forward-extending dead row units 124. The row units 120, 124 and the cross auger 110 define a feeder plane therebetween where useable parts of stalk crops are conveyed rearward from the row units 120, 124 to the cross auger 110.

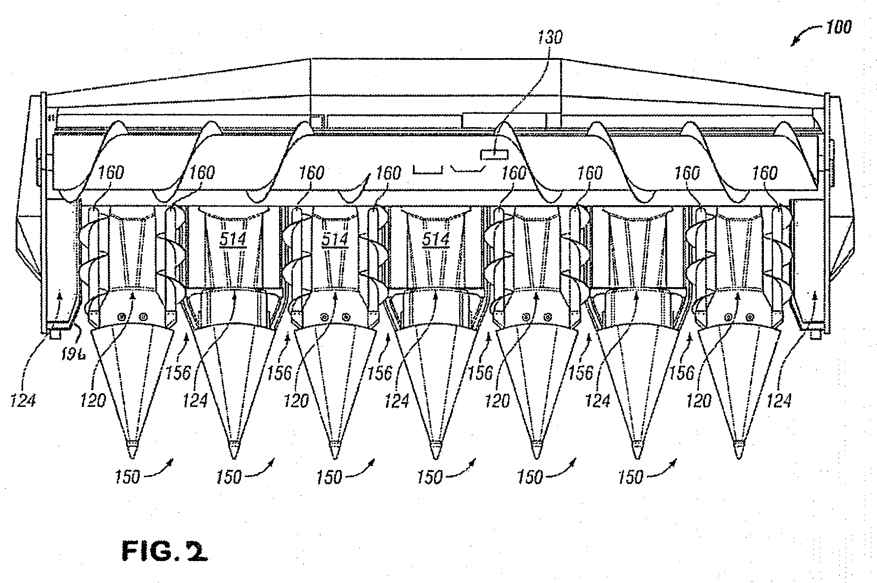

Live row units 120 and dead row units 124 cooperate with one another. Live row units 120 have powered components, as described in greater detail below, whereas the dead row units 124 generally do not have powered components. In one embodiment, as best shown in FIGS. 1 and 2, the header 110 has four live row units 120, three dead row units 124, plus one half of a dead row unit 124 on each end of the header 110. The row units 120, 124 are arranged relative to one another so that the row units 120, 124 alternate relative to each other along the length of the header 110. In other words, every other row unit is a live row unit 120 with a dead row unit 124 adjacent to each live row unit 120. The row units 120, 124 are spaced relative to one another to correspond with the spacing of the crop to be harvested and to provide a path to receive the crop therebetween. For example, a live row unit 120 may be placed between two dead row units 124 to cooperate therewith.

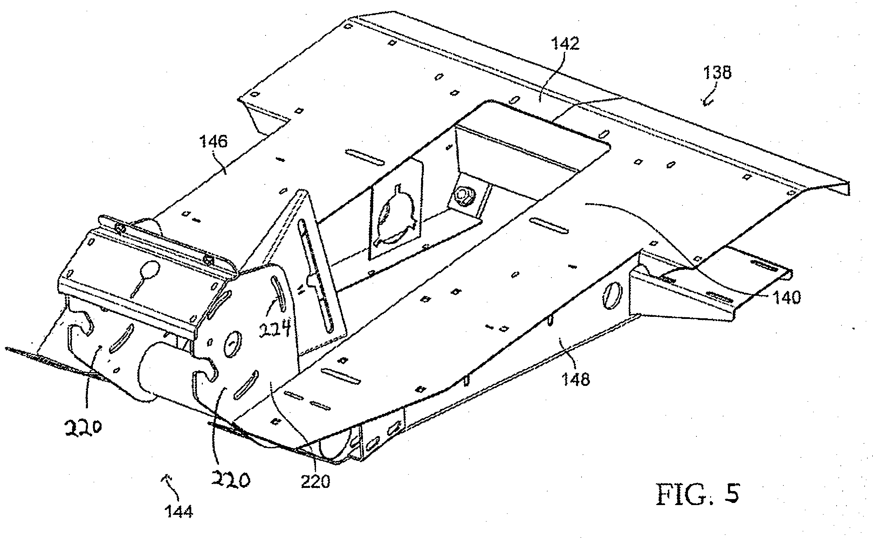

FIG. 5 illustrates a row assembly 138 having a frame 140, a back end 142 and a forward end 144. Half of the frame 140 forms part of a live row unit 120 and the other half forms part of a dead row unit 124. Therefore, one live row unit 120 includes two halves of two separate and adjacent frames 140. One dead row unit 124 includes two halves of two separate and adjacent frames. Each frame 140 includes a first portion 146 and a second portion 148 which are spaced from one another and protrude outwardly and forward from the back end 142. At the front and between adjacent row units 120, 124 is a crop entry 150 for receiving the stalks of the crop. The first and second portions 146,148 receive stripper plates 154 which cooperate with one another to define the crop passage 156 between adjacent row units 120, 124. The stripper plates 154 strip useable parts such as ears of corn from crop stalks that are received in the crop passage 156.

Each live row unit 120 of the present invention includes at least one fore-to-aft gathering auger 160, in place of the two gathering chains and tensioners, for conveying the useable parts rearward to the cross auger 110. Each gathering auger 160 has a proximal end and a distal end and is preferably aligned substantially with a corresponding crop passage 156. However, the axis of rotation of the gathering auger 160 may instead be misaligned with the crop passage 156 such that the crop stalks in the back of the crop passage may be urged more so toward the gathering auger 160 than the crop stalks are at the beginning of the crop passage 156.

Preferably, each live row unit 120 includes a pair of counter-rotating augers 160. The dead row units 124, on the other hand, do not include gathering augers 160 or any gathering chains. Therefore, the complexity of the header 110 is reduced by utilizing gathering augers 160 on live row units 120 instead of gathering chains and tensioners. Also, by utilizing dead row units 124 in combination with the live row units 120 the overall complexity of the header 110 is substantially reduced because the dead row units 124 do not have gathering augers 160 or gathering chains and tensions and also because the drive means for driving the gathering augers 160 is simpler than known drives used in combination with gathering chains.

The gathering augers 160 are preferably driven independently of the snap rolls. The gathering auger 160 may be driven by electrical, mechanical or hydraulic means. Preferably, each gathering auger 160 is cantilevered from the frames 140 and rotationally driven from the forward most end of its respective row unit 120 away from the cross auger 110 rather than the rear of the row unit 120 in close proximity to the cross auger 110 so that the delivery or the distal end of the gathering auger 160 is not obstructed. This allows ears and stalks to be delivered to the cross auger 110 unimpeded by bearing supports, drive mechanisms or some other crop impeding structure.

In one or more embodiments of the present invention, the proximal end of one or more gathering augers 160 is coupled to the frame 140 of the row unit 120 in a manner that permits the distal end of the gathering auger 160 to move into and out of the feeder plane. In one embodiment, a mechanism coupled to the proximal end of the gathering auger 160 allows the gathering auger 160 to rotate or pivot in a vertical plane between a first position for processing crops when harvesting and a second position for maintenance purposes. Preferably, the distal end of the gathering auger when in the first position is higher in the vertical plane than when the distal end is in the second position.

Also, the gathering auger 160 preferably pivots partially about a substantially horizontal rotational axis that extends substantially transversely between the row units 120. The gathering auger 160 may be pivoted such that its distal end is raised upward above the row unit 120 to allow the gathering auger 160 to be repaired, replaced or perform maintenance without interference from the cross auger 110. Also, when the gathering auger 160 is pivoted upward out of the feeder plane other components can be more easily accessed.

An arrangement of gears or wheels such as bevel gears 182, 184 may be used for transmission of the driving motion to the gathering auger 160 from a driven shaft 166 within each live row unit 120 while also allowing the distal end of the gathering auger 160 to pivot upward about the same axis of the shaft 166. Each shaft 166 preferably drives a pair of gathering augers 160 of a single live row unit 120 so that the pair of gathering augers are driven about the same axis about which they may pivot into and out of the feeder plane. When the gathering auger 160 is pivoted upward, fasteners may be removed from the auger 160 so that the outer flighting portion of the gathering auger 160 may slide rearward so that it may be removed from an inner shaft and from cylindrical bearings allowing the flighting portion to rotate about the inner shaft.

A mounting bracket 210 rotationally couples the gathering auger 160 to an outer side of the frame 140 of the row assembly 138, such as vertical mounting support 220, to secure the gathering auger 160 to the frame 140 in an operational manner. The vertical mounting support 220 includes radial extending openings or arched slots 224 for receiving fasteners 226 for securing the mounting bracket 210 to the frame 140. When the distal end of the gathering auger 160 is pivoted upward, the distal end of the gathering auger 160 coupled to the mounting bracket 210 causes the mounting bracket 210 to rotate in the slots 224 of the vertical mounting support 220. The length of the arched slots 224 dictate the range the gathering auger 160 can be pivoted between the first and second positions. The range of motion of the distal end of the gathering auger 160 may be limited by the length or shape of the slots 224.

The pair of straight bevel gears 182, 184, in mesh are used to drive the gathering auger 160 while harvesting. The shaft 166 of the live row unit 120 corresponds with the axis upon which one or more augers 160 pivot. The distal end of the gathering auger 160 is coupled to the bevel gear 184 which is driven by the bevel gear 182 on shaft 166. The shaft 166 may be chain driven by a hydraulic drive motor 178 with sprocket 180. Preferably, the drive motor 178 is sufficiently sized to drive all of the gathering augers 160. The drive motor 178 and sprocket 180 with chain 198 drives sprocket 188 and shaft 186 which extends in a transverse manner along the length of the header 100. There are preferably numerous other sprockets 188 along the length of the shaft 186. The number of sprockets 188 depends on the number of live row units 120. Chains 190 extend from the sprockets 188 of the shaft 186 to sprockets 192 on shaft 166.

Because the augers 160 are driven by the drive motor 178, the speed of the augers 160 is independent of the speed of the cross auger 110. The chain 190 driving the sprocket 192 which in turn drives the shaft 166 with bevel gears 182. The speed of the augers 160 can be changed automatically or manually in relation to the ground speed much like current grain headers on harvesters that control reel speed. Moreover, the augers 160 can be driven independent of the snap rolls. The speed of the gathering augers 160 may be varied while either or both the harvester and the snap rolls are maintained at a constant speed.

In addition to the apparatuses described herein, also disclosed is a method for harvesting crop with an attachment for an agricultural vehicle that includes the gathering augers 160. The method includes operating the gathering augers 160 at a first speed to gather crop stalks in the crop passages 156 and operating a snap roll for removing useable parts from crop stalks at a second speed independently of the gathering augers 160. The method may also include one or more of the following steps: varying the speed of the gathering augers 160 while the speed of the snap rolls remain constant, increasing the speed of the gathering augers 160 while the speed of the snap rolls remain constant, decreasing the speed of the gathering augers 160 while the speed of the snap rolls remain constant, varying the speed of the snap rolls while the speed of the gathering augers 160 remain constant, increasing the speed of the snap rolls while the speed of the gathering augers 160 remain constant, decreasing the speed of the snap rolls while the speed of the gathering augers 160 remain constant, and/or changing the speed of the gathering augers 160 relative the ground speed of the harvester.

To keep stalks captured and engaged by the gathering auger 160 an elongated member 196 such as a rod is positioned in close proximity to the flighting of the gathering auger 160. Preferably, the elongated member 196 is substantially parallel aligned with the gathering auger 160. However, in other embodiments, at least a portion of the elongated member 196 may be shaped or curved along its length or the distal end of the elongated member 196 may be closer in proximity to the distal end of the gathering auger 160. The elongated member 196 may be rigid, flexible, or semi-flexible to urge the stalks in the crop passage toward the gathering auger 160. In one or more embodiments, the elongated member 196 is cantilevered off the forward end 144 of the frame 140 of the dead row unit 124 to urge the stalks in the crop passage 156 toward the gathering auger 160 of the opposing live row unit 120. The dead row unit may also include a second elongated member 196 extending toward another gathering auger 160 of another live row unit. In an alternative embodiment, the elongated member 196 may be a strap or be detachably coupled or mounted to a row unit.

Underneath the stripper plates 154 of each frame 140 are one or more snap rolls. At each crop passage 156 there is one driven snap roll 230 on one side of the crop passage 156 and one or more undriven idler rolls 232 opposing the snap roll 230 from the other side of the crop passage 156. Angled bearing supports may be used to mount the snap rolls and idler rolls to the frames.

Because the idler rolls 232 are undriven, the powered snap roll 230 is operated at different speeds relative to the idler rolls 232. Preferably, the powered snap roll 230 opposes a pair of idler rolls 232. On each side of a live row unit 120 there is a driven snap roll 230 and on each side of a dead row unit 124 there is at least one idler roll 232. Preferably, each side of the dead row unit 124 includes two idler rolls 232 for a total of four idler rolls 232 for each dead row unit 124. Unpowered idler rolls 232 preferably have smooth outer peripheries without knives or bars and are lighter and less expensive which helps to conserve power that could instead be used to chop stalks with mowers as described below.

Preferably, the powered snap rolls 230 include knives 234. If the idler roll 232 were to be powered it could be powered at a slower speed than an opposing snap roll 230. Also, the idler roll 232 could be adjustable relative to the side of the frame 140 of a dead row unit 124 so that it could be moved closer to the snap roll 230 for stalk chopping or moved away when reduced stalk chopping is desired.

One or both ends of the idler roll 232 could also be spring loaded to allow it to move away if an obstruction is encountered in the crop passage 156. The angle bearing could incorporate a spring or a spring could be used at the opposite end to bias the idler roll toward the crop stalks and the opposing snap roll but then also allow an obstruction to pass between the opposing idler and snap rolls by compressing the springs.

Also disclosed is a method for harvesting stalk crops with an attachment for an agricultural vehicle. The method includes pulling crop stalks in a crop passage with a snap roll against at least one stripper plate. The method also includes biasing the snap roll toward the crop stalks in the crop passage and allowing the snap roll to move laterally in the event of an obstruction in the crop passage impacting the snap roll. The movement of the snap roll allows the obstruction to pass.

If utilizing a pair of idler rolls 232 to oppose the snap roll 230, upper and lower idler rolls 232 are positioned so that the axis of rotation of the driven roll 230 is vertically between but horizontally offset from the axis of rotation of each idler roll 232. The axes of rotation of both idler rolls 232 are preferably both parallel and vertically aligned with each other because the idler rolls 232 are at different distances from the ground relative to each other.

A pair of idler rolls 232 vertically offset from their opposing and corresponding snap roll 230 helps to lean or urge the corn plant toward the gathering auger 160 which is positioned on one side of a live row unit 120. Also, in one or more embodiments, the stripper or deck plates 154 may also be offset from one another relative to the ground to urge the crop to the side of the crop passage 156 with the gathering auger 160. Improved cutting action is achieved by running the knives 234, also commonly referred to as flutes or bars, of the powered snap rolls 230 in close proximity to the one or more opposing idler rolls 232. A pair of idler rolls 232 cooperating with one another to oppose a snap roll 230 further increase the cutting and chopping ability by enhancing the engagement of the stalks in the knives 234 of the snap roll 230.

The foregoing has broadly outlined some of the more pertinent aspects and features of the present invention. These should be construed to be merely illustrative of some of the more prominent features and applications of the invention. Other beneficial results can be obtained by applying the disclosed information in a different manner or by modifying the disclosed embodiments. Accordingly, other aspects and a more comprehensive understanding of the invention may be obtained by referring to the detailed description of the exemplary embodiments taken in conjunction with the accompanying drawings, in addition to the scope of the invention defined by the claims.

## Claims

1. A pair of forward-extending row units (120,124) wherein a first row unit (120) of said pair of row units comprises a first stripper plate (154) and wherein a second row unit (124) of said pair of row units comprises a second stripper plate (154), said first and second stripper plates (154) opposing one another to at least partially define a first crop passage (156) for receiving crop stalks and to remove useable parts from the crop stalks gathered in said first crop passage, said first row unit (120) further comprising a first, powered, snap roll (230) and said second row unit (124) further comprising a second, unpowered, snap roll (232) wherein said first and second snap rolls (230,232) oppose one another on opposite sides of said first crop passage (156) and operated at different speeds relative to one another, **characterized in that** said powered snap roll (230) is opposed by a pair of unpowered snap rolls (232).

2. The pair of row units of Claim 1 wherein said powered snap roll (230) and said unpowered snap rolls (232) are at different heights relative the ground.

3. The pair of row units of Claim 1 wherein each said unpowered snap roll (232) of said pair of unpowered snap rolls are offset from one another relative their distance from the ground to urge the crop stalks toward said first row unit (120).

4. The pair of row units of Claim 1 wherein said second snap rolles (232) are smooth.

5. The pair of row units of Claim 1 wherein said first row unit comprises at least one gathering auger (160) and said first and second snap rolls (230,232) urge the crop stalks toward said gathering auger (160).

6. The pair of row units of Claim 1 wherein said first and second stripper plates (154) are offset from one another relative the ground to urge the crop stalks toward said first row unit.

## Patentansprüche

1. Paar sich vorwärts erstreckender Reiheneinheiten (120, 124), wobei eine erste Reiheneinheit (120) des Paars von Reiheneinheiten eine erste Abstreiferplatte (154) und eine zweite Reiheneinheit des Paars von Reiheneinheiten eine zweite Abstreiferplatte (154) aufweist, wobei die erste und die zweite Abstreiferplatte (154) einander gegenüberliegen, um einen ersten Erntegutdurchlass (156) zumindest teilweise festzulegen, um Erntegutstängel aufzunehmen und verwendbare Teile der Erntegutstängel zu entfernen, die in dem ersten Erntegutdurchlass gesammelt sind, wobei die erste Reiheneinheit (120) weiterhin eine erste angetriebene Schnapprolle (230) und die zweite Reiheneinheit (124) eine zweite nichtangetriebene Schnapprolle (232) aufweist, wobei die erste und zweite Schnapprolle (230, 232) einander an entgegengesetzten Seiten des Erntegutdurchlasses (156) gegenüberliegen und mit unterschiedlichen Geschwindigkeiten relativ zueinander betrieben werden, **dadurch gekennzeichnet, dass** die angetriebene Schnapprolle (230) einem Paar nichtangetriebener Schnapprollen (232) gegenüberliegt.

2. Paar von Reiheneinheiten nach Anspruch 1, wobei sich die angetriebene Schnapprolle (230) und die nichtangetriebenen Schnapprollen (232) auf unterschiedlichen Höhen relativ zum Boden befinden.

3. Paar von Reiheneinheiten nach Anspruch 1, wobei jede der nichtangetriebenen Schnapprollen (232) des Paars nichtangetriebener Schnapprollen so relativ zueinander versetzt angeordnet ist, dass sich ihr Abstand zum Boden unterscheidet, um die Erntegutstängel in Richtung der ersten Reiheneinheit (120) zu drängen.

4. Paar von Reiheneinheiten nach Anspruch 1, wobei die zweiten Schnapprollen (232) glatt sind.

5. Paar von Reiheneinheiten nach Anspruch 1, wobei die erste Reiheneinheit mindestens eine Sammelschnecke (160) aufweist und die erste und zweite Schnapprolle (230, 232) die Erntegutstängel in Richtung der Sammelschnecke (160) drängen.

6. Paar von Reiheneinheiten nach Anspruch 1, wobei die erste und zweite Abstreiferplatte (154) so versetzt zueinander relativ zum Boden sind, dass sie die Erntegutstängel in Richtung der ersten Reiheneinheit drängen.

## Revendications

1. Paire d'unités de rang s'étendant vers l'avant (120, 124) dans laquelle une première unité de rang (120) de ladite paire d'unités de rang comprend une première plaque de séparation (154) et dans laquelle une seconde unité de rang (124) de ladite paire d'unités de rang comprend une seconde plaque de séparation (154), lesdites première et seconde plaques de séparation (154) étant opposées l'une à l'autre afin de définir au moins partiellement un premier passage de récolte (156) destiné à recevoir des tiges de plantes à récolter et à séparer les parties utilisables des tiges de plantes à récolter, regroupées dans ledit premier passage de récolte, ladite première unité de rang (120) comprenant, en outre, un premier rouleau de pression entraîné (230) et ladite seconde unité de rang (124) comprenant, en outre, un second rouleau de pression libre (232) dans laquelle lesdits premier et second rouleaux de pression (230, 232) sont opposés l'un par rapport à l'autre sur des côtés opposés dudit premier passage de récolte (156) et sont commandés à des vitesses différentes l'une de l'autre, **caractérisée en ce que** ledit rouleau de pression entraîné (230) est opposé à une paire de rouleaux de pression libres (232).

2. Paire d'unités de rang selon la revendication 1, dans laquelle ledit rouleau de pression entraîné (230) et lesdits rouleaux de pression libres (232) sont à des hauteurs différentes par rapport au sol.

3. Paire d'unités de rang selon la revendication 1, dans laquelle chacun desdits rouleaux de pression libres (232) de ladite paire de rouleaux de pression libres est décalé par rapport à l'autre du point de vue de sa distance au sol afin d'appliquer les tiges de plantes à récolter vers ladite première unité de rang (120).

4. Paire d'unités de rang selon la revendication 1, dans laquelle lesdits seconds rouleaux de pression (232) sont lisses.

5. Paire d'unités de rang selon la revendication 1, dans laquelle ladite première unité de rang comprend au moins une vis de regroupement (160) et lesdits premier et second rouleaux de pression (230, 232) appliquent les tiges de plantes à récolter vers ladite vis de regroupement (160).

6. Paire d'unités de rang selon la revendication 1, dans laquelle lesdites première et seconde plaques de séparation (154) sont décalées l'une de l'autre par rapport au sol afin d'appliquer les tiges de plantes à récolter vers ladite première unité de rang.
